(19) Europäisches Patentamt
European Patent Office
Office européen des brevets

(11) **EP 3 879 488 A1**

(12) # EUROPEAN PATENT APPLICATION

published in accordance with Art. 153(4) EPC

(43) Date of publication:
**15.09.2021 Bulletin 2021/37**

(51) Int Cl.:
**G06T 7/10** (2017.01)  **G06T 17/00** (2006.01)

(21) Application number: **19882110.0**

(22) Date of filing: **01.11.2019**

(86) International application number:
**PCT/CN2019/115095**

(87) International publication number:
**WO 2020/093950 (14.05.2020 Gazette 2020/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2018 CN 201811315438**

(71) Applicant: **TENCENT TECHNOLOGY (SHENZHEN) COMPANY LIMITED**
**Shenzhen, Guangdong 518057 (CN)**

(72) Inventors:
• **ZHOU, Cheng**
  **Shenzhen, Guangdong 518057 (CN)**
• **WANG, Tianzhou**
  **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **THREE-DIMENSIONAL OBJECT SEGMENTATION METHOD AND DEVICE AND MEDIUM**

(57)     The present application relates to the technical field of computer visions of artificial intelligence technology, and provides a three-dimensional object segmentation method and device and a medium. The three-dimensional object segmentation method comprises: obtaining a point cloud of a three-dimensional object; determining three zooming directions of the point cloud; respectively zooming the position of each point in the point cloud along the three zooming directions, so that the scales of the zoomed point cloud in the three zooming directions are the same; and determining a segmentation result of the three-dimensional object based on the zoomed point cloud. The technical solution zooms the point cloud representing the three-dimensional object in each direction to the same scale. Therefore, in subsequent segmentation processing, a hollow-out structure such as a thin-walled object is no longer identified as an approximate depression, and thus the segmentation accuracy is further improved compared with the conventional three-dimensional object segmentation algorithm.

FIG. 1

**EP 3 879 488 A1**

## Description

This application claims priority to Chinese Patent Application No. 201811315438.3, entitled "THREE-DIMENSIONAL OBJECT SEGMENTATION METHOD AND DEVICE AND MEDIUM" and filed on November 6, 2018, which is incorporated herein by reference in its entirety.

## FIELD

Embodiments of the present disclosure relate to the field of computer vision technologies of an artificial intelligence technology, and more specifically to a three-dimensional object segmentation method, a three-dimensional object segmentation device, and a medium.

## BACKGROUND

The simulation-based physical simulation technology is an important branch of computer vision technologies, and is widely applied to films and televisions, animations, games, robot control, and the like. In order to efficiently and accurately simulate a collision in a real physical environment, or enable a user to interact in real time, developers often use convex shapes, such as cylinders, ellipsoids, or convex polyhedrons, to approximate objects in a virtual world in the game and film and television production. However, there are a large number of concave objects in practice. If a simple convex set is used for approximation, not only a large approximation error is caused, but also a false collision occurs.

To resolve this problem, convex segmentation is required to be performed on a three-dimensional object in the real physical environment. That is, the three-dimensional object is segmented into several sub-objects, and each sub-object is ensured to be a convex set.

Currently, a precise convex set segmentation algorithm exists. However, a computation amount of the algorithm increases exponentially. The algorithm not only is infeasible in calculation, but also excessive sub-objects may be segmented, which is unfavorable for use in a simulation environment. To overcome these disadvantages, an approximate convex set segmentation algorithm is further provided in the related art, by which the equalization between a segmentation speed, the number of the segmented sub-objects, and the simulation collision effect can be implemented while allowing a local tiny concave.

An indoor environment is a classic physical simulation object. In the indoor environment, a shape of a three-dimensional object is more complex, and collisions occur more frequently, which requires a higher requirement for three-dimensional object segmentation. A large number of thin-walled objects such as wall surfaces, table tops, and various plates exist in the indoor environment, and many of the thin-walled objects further have hollowed-out structures, such as a wall surface having a door and window, and a drawer and a cabinet. Due to the existence of such objects, the difficulty of three-dimensional object segmentation is further increased.

The approximate convex set segmentation algorithm described above often has a poor segmentation effect on the thin-walled objects having the hollowed-out structures. Intuitively, this is because that, it is difficult to effectively distinguish the hollowed-out structure of the thin-walled object from a small structural concave by the conventional approximate convex set segmentation algorithm. Specifically, when segmenting the three-dimensional object by the related approximate convex set algorithms, all directions are processed in a same manner without considering the special structure of the thin-walled object. The concavity of many thin-walled objects is extremely sensitive to the directions.

## SUMMARY

In view of the above, it is expected to provide a three-dimensional object segmentation method and device by which a segmentation effect for hollowed-out thin-walled objects can be improved.

According to an aspect of embodiments of the present disclosure, a three-dimensional object segmentation method is provided, applied to a three-dimensional object segmentation device. The method includes: obtaining a point cloud of a three-dimensional object; determining three scaling directions of the point cloud; scaling a position of each of points in the point cloud in the three scaling directions, so that a scaled point cloud has a same scale in the three scaling directions; and determining a segmentation result of the three-dimensional object based on the scaled point cloud.

Further, in the three-dimensional object segmentation method according to the embodiment of the present disclosure, the step of determining the three scaling directions of the point cloud data includes: performing three-dimensional space ellipse fitting on the point cloud; establishing a first coordinate system with three axes of a fitted ellipsoid as coordinate axes; determining a minimum circumscribed parallelepiped of the point cloud based on a projection of the point cloud in the first coordinate system; and determining directions respectively perpendicular to three adjacent planes of the minimum circumscribed parallelepiped as the three scaling directions.

Further, in the three-dimensional object segmentation method according to the embodiment of the present disclosure, the step of determining the minimum circumscribed parallelepiped of the point cloud based on the projection of the point cloud in the first coordinate system includes: performing rotation scale intercepting on projections of the point cloud on coordinate axis planes to obtain a minimum circumscribed cuboid of the point cloud; and adjusting edges of the minimum circumscribed cuboid to obtain the minimum circumscribed parallelepiped, where a volume of the minimum circumscribed parallelepiped is less than a volume of the minimum circumscribed cuboid.

Further, in the three-dimensional object segmentation method according to the embodiment of the present disclosure, the step of scaling the position of the point cloud in the three scaling directions includes: establishing a second coordinate system with the three scaling directions as coordinate axes; transforming, for each of the points in the point cloud, a coordinate of the point into a coordinate in the second coordinate system; determining a maximum value and a minimum value among coordinate values of the point on coordinate axes in the second coordinate system; and normalizing the coordinate values of the point based on the maximum value and the minimum value.

Further, in the three-dimensional object segmentation method according to the embodiment of the present disclosure, the step of determining the segmentation result of the three-dimensional object based on the scaled point cloud includes: determining, based on the scaled point cloud, multiple model patches for reconstructing an outer surface of the three-dimensional object; clustering the multiple model patches into multiple patch groups based on similarities between the model patches; and determining a maximum set of patch groups that are adjacent and are convex sets, and determining the maximum set of patch groups as a segmentation portion of the three-dimensional object.

Further, in the three-dimensional object segmentation method according to the embodiment of the present disclosure, the step of determining, based on the scaled point cloud, the multiple model patches for reconstructing the outer surface of the three-dimensional object includes: cutting the point cloud by multiple first cubes of equal size; replacing all of the points in the point cloud with endpoints of the first cubes, to obtain an updated point cloud; cutting the updated point cloud by multiple second cubes of equal size, where a volume of each of the second cubes is greater than a volume of each of the first cubes; and determining the model patches based on point intersections between the second cubes and the updated point cloud.

Further, in the three-dimensional object segmentation method according to the embodiment of the present disclosure, after the step of determining the multiple model patches for reconstructing the outer surface of the three-dimensional object, the method further includes: adding an adjustment point on each of the model patches; and generating a new model patch based on the added adjustment point.

According to another aspect of the present disclosure, a three-dimensional object segmentation device is provided. The device includes: an obtaining unit, a scaling direction determining unit, a scaling unit and a segmentation unit. The obtaining unit is configured to obtain a point cloud of a three-dimensional object. The scaling direction determining unit is configured to determine three scaling directions of the point cloud. The scaling unit is configured to scale a position of each of points in the point cloud in the three scaling directions, so that a scaled point cloud has a same scale in the three scaling directions. The segmentation unit is configured to determine a segmentation result of the three-dimensional object based on the scaled point cloud.

Further, in the three-dimensional object segmentation device according to the embodiment of the present disclosure, the scaling direction determining unit includes: a fitting component, a minimum circumscribed parallelepiped search component and a scaling direction determining component. The fitting component is configured to perform three-dimensional space ellipse fitting on the point cloud, and establish a first coordinate system with three axes of a fitted ellipsoid as coordinate axes. The minimum circumscribed parallelepiped search component is configured to determine a minimum circumscribed parallelepiped of the point cloud based on a projection of the point cloud in the first coordinate system. The scaling direction determining component is configured to determine directions respectively perpendicular to three adjacent planes of the minimum circumscribed parallelepiped as the three scaling directions.

Further, in the three-dimensional object segmentation device according to the embodiment of the present disclosure, the minimum circumscribed parallelepiped search component is configured to: perform rotation scale intercepting on projections of the point cloud on coordinate axis planes to obtain a minimum circumscribed cuboid of the point cloud; and adjust edges of the minimum circumscribed cuboid to obtain the minimum circumscribed parallelepiped, where a volume of the minimum circumscribed parallelepiped is less than a volume of the minimum circumscribed cuboid.

Further, in the three-dimensional object segmentation device according to the embodiment of the present disclosure, the scaling unit is configured to: establish a second coordinate system with the three scaling directions as coordinate axes; transform, for each of the points in the point cloud, a coordinate of the point into a coordinate in the second coordinate system; determine a maximum value and a minimum value among coordinate values of the point on coordinate axes in the second coordinate system; and normalize the coordinate values of the point based on the maximum value and the minimum value.

Further, in the three-dimensional object segmentation device according to the embodiment of the present disclosure, the segmentation unit includes: a patch reconstruction component, a clustering component and a segmentation component. The patch reconstruction component is configured to determine, based on the scaled point cloud, multiple model patches for reconstructing an outer surface of the three-dimensional object. The clustering component is configured to cluster the multiple model patches into multiple patch groups based on similarities between the model patches. The segmentation component is configured to: determine a maximum set of patch groups that are adjacent and are convex sets, and determine the maximum set of patch groups as a segmentation portion of the three-dimensional object.

Further, in the three-dimensional object segmentation device according to the embodiment of the present disclosure, the patch reconstruction component is configured to: cut the point cloud by multiple first cubes of equal size; replace all of the points in the point cloud with endpoints of the first cubes, to obtain an updated point cloud; cut the updated point cloud by multiple second cubes of equal size, where a volume of the second cube is greater than a volume of the first cube; and determine the model patches based on point intersections between the second cubes and the updated point cloud.

Further, in the three-dimensional object segmentation device according to the embodiment of the present disclosure, the segmentation unit includes: an adjustment component. The adjustment component is configured to: add an adjustment point on each of the model patches; and generate a new model patch based on the added adjustment point.

According to another aspect of the present disclosure, a three-dimensional object segmentation device is provided. The device includes: a storage unit storing a computer program, and a processing unit. The processing unit is configured to implement, when executing the computer program, the following operations of: obtaining a point cloud of a three-dimensional object; determining three scaling directions of the point cloud; scaling a position of each of points in the point cloud in the three scaling directions, so that a scaled point cloud has a same scale in the three scaling directions; and determining a segmentation result of the three-dimensional object based on the scaled point cloud.

According to another aspect of the present disclosure, a computer-readable recording medium is provided. The computer-readable recording medium stores a computer program. The computer program, when executed by a processing unit, implements the following operations of: obtaining a point cloud of a three-dimensional object; determining three scaling directions of the point cloud; scaling a position of each of points in the point cloud in the three scaling directions, so that a scaled point cloud has a same scale in the three scaling directions; and determining a segmentation result of the three-dimensional object based on the scaled point cloud.

In the three-dimensional object segmentation method, the three-dimensional object segmentation device, and the medium according to the embodiments of the present disclosure, the point cloud representing the three-dimensional object is scaled to the same scale in directions. In this way, a hollowed-out structure of a thin-walled object is no longer recognized as a concave that may be approximated in the subsequent segmentation processing, so that the segmentation accuracy can be further improved, compared with the conventional three-dimensional object segmentation algorithm.

## BRIEF DESCRIPTION OF THE DRAWINGS

FIG. 1 is a flowchart showing a three-dimensional object segmentation method according to an embodiment of the present disclosure;

FIG. 2 is a schematic diagram showing an example of a to-be-segmented three-dimensional object;

FIG. 3 is a schematic diagram illustrating a quadratic error metric simplification algorithm;

FIG. 4 is a flowchart showing a possible processing process of a scaling direction determining step shown in FIG. 1;

FIG. 5(A) and FIG. 5(B) are schematic diagrams illustrating ellipse fitting in a three-dimensional space;

FIG. 6 is a schematic diagram showing a first coordinate system obtained after performing ellipse fitting in a three-dimensional space;

FIG. 7 is a schematic diagram showing projections of a point cloud of a three-dimensional object on coordinate axes in the first coordinate system;

FIG. 8 is a flowchart showing a specific process of a segmentation step shown in FIG. 1;

FIG. 9 is a schematic diagram showing a three-dimensional object obtained after performing scaling processing shown in FIG. 8;

FIG. 10 is a schematic diagram showing a segmentation result of a three-dimensional object obtained by performing segmentation processing shown in FIG. 1;

FIG. 11 is a schematic diagram showing a final segmentation result obtained by inversely transforming a coordinate system of the segmentation result shown in FIG. 10 into an original coordinate system and in an original scale;

FIG. 12 is a schematic diagram showing a segmentation result obtained by a conventional approximate convex set segmentation algorithm as a comparative example;

FIG. 13 is a flowchart showing a specific process of segmentation processing shown in FIG. 1;

FIG. 14 shows a comparison table for reconstructing a contour of an outer surface of an object;

FIG. 15 is a functional block diagram showing a specific configuration of a three-dimensional object segmentation device according to an embodiment of the present disclosure;

FIG. 16 shows an example of a specific configuration of a scaling direction determining unit in FIG. 15;

FIG. 17 shows an example of a specific configuration of a segmentation unit in FIG. 15;

FIG. 18 shows an example of a three-dimensional object segmentation device as a hardware entity provided in the present disclosure; and

FIG. 19 is a schematic diagram showing a computer-readable recording medium according to an embodiment of the present disclosure.

## DETAILED DESCRIPTION OF THE EMBODIMENTS

Preferred embodiments of the present disclosure are described below with reference to the accompanying drawings. The following description given with reference to the accompanying drawings is provided to help understanding of exemplary embodiments of the present disclosure defined by the claims and equivalents thereof. Specific details for helping the understanding are contained in the description and are only considered to be exemplary. Therefore, a person skilled in the art understands that, various changes and modifications may be made to the embodiments described herein without departing from the scope and spirit of the present disclosure. In addition, detailed descriptions of functions and constructions well known in the art are omitted for clarity and conciseness.

The artificial intelligence (AI) is a theory, a method, a technology, and an application system in which a digital computer or a machine controlled by a digital computer is used to simulate, extend, and expand human intelligence, perceive the environment, obtain knowledge, and obtain the best result using the knowledge. In other words, the artificial intelligence is a comprehensive technology of computer science, which attempts to understand essence of intelligence and produce a new intelligent machine that responds in a manner similar to human intelligence. The artificial intelligence is intended for studying design principles and implementation methods of various intelligent machines, so that the machines have functions of perception, reasoning, and decision-making.

The artificial intelligence technology is a comprehensive discipline, covering a wide range of fields including both a hardware-level technology and a software-level technology. The artificial intelligence basic technology generally includes a technology such as a sensor, a dedicated artificial intelligence chip, cloud computing, distributed storage, a big data processing technology, an operation/interaction system, or mechatronics. The artificial intelligence software technology mainly includes a computer vision technology, a speech processing technology, a natural language processing technology, machine learning/deep learning, and the like.

The computer vision (CV) technology is a science in which how to cause a machine to "see" is studied, and furthermore, is machine vision technology in which a camera and a computer are used for replacing human eyes to perform recognition, tracking, measurement, and the like on a target, and further perform graphic processing, so that the computer processes the target into an image more suitable for human eyes to observe, or an image transmitted to an instrument for detection. As a scientific subject, the computer vision technology studies related theories and technologies, and attempts to establish an artificial intelligence system that can obtain information from images or multidimensional data. The computer vision technologies generally include technologies such as image processing, image recognition, image semantic understanding, image retrieval, OCR, video processing, video semantic understanding, video content/behavior recognition, three-dimensional object reconstruction, a 3D technology, virtual reality, augmented reality, and simultaneous localization and mapping, and further include common biological feature recognition technologies such as face recognition and fingerprint recognition.

With the research and progress of the artificial intelligence technology, the artificial intelligence technology is studied and applied to multiple fields, such as a common smart home, a smart wearable device, a virtual assistant, a smart speaker, smart marketing, unmanned driving, automatic driving, an unmanned aerial vehicle, a robot, smart medical care, and smart customer service. It is believed that with the development of technologies, the artificial intelligence technology will be applied to more fields, and play an increasingly important role.

The solution provided in the embodiments of the present disclosure relates to technologies such as the computer vision technology in the artificial intelligence technology, and a three-dimensional object segmentation method is provided. The method may be applied to a simulation-based physical simulation technology, which is widely applied to films and televisions, animations, games, robot control, and the like. What is important in the physical simulation technology is how to segment a three-dimensional object, so as to facilitate later collision simulation.

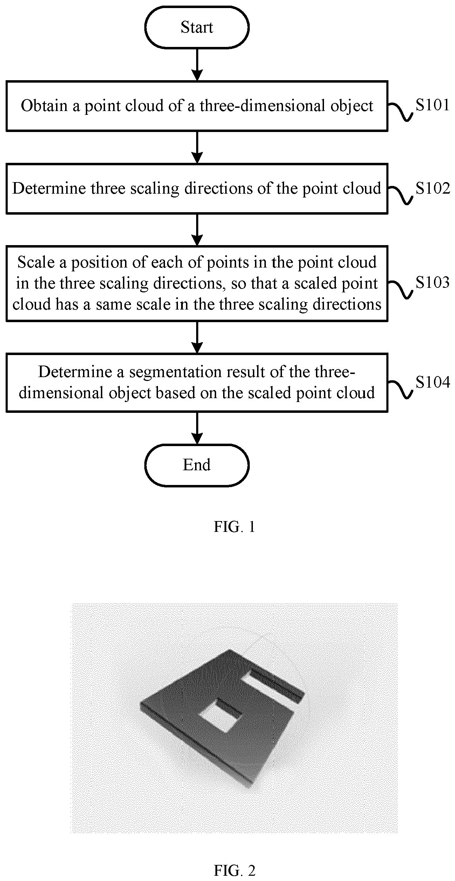

First, a three-dimensional object segmentation method according to an embodiment of the present disclosure is described with reference to FIG. 1. An execution subject of steps in the three-dimensional object segmentation method may be a three-dimensional object segmentation device. The three-dimensional object segmentation device may be any computer device that has computing and storage capabilities, for example, a terminal device such as a personal computer (PC), a mobile phone, or a tablet computer, or may be a server. As shown in FIG. 1, the three-dimensional object segmentation method includes the following steps S101 to S104.

First, in step S101, a point cloud of a three-dimensional object is obtained. For example, FIG. 2 shows an example of a to-be-segmented three-dimensional object. As shown in FIG. 2, the three-dimensional object is a wall surface that has a window and a door in an indoor scene. The point cloud may be generated by scanning the three-dimensional object by a laser scanning component. In an actual scene, the generated point cloud generally has a quite high complexity. For example, a three-dimensional model (that is, the three-dimensional object described above) may be described using a triangular mesh. A complex triangular mesh model is generally formed by hundreds of thousands or even billions of triangular patches. Considering requirements of a processing speed and a storage size, the mesh model is required to be simplified. Simplifying the mesh mode requires reserving information on a shape of the model as much as possible while merging vertices of the mesh. Therefore, in a possible embodiment, an originally obtained point cloud may be simplified further by merging points, deleting points, and the like, to reduce the complexity of a subsequent algorithm, so as to accelerate a whole calculation process. For example, a quadric error metrics (QEM) simplification algorithm may be used in the process of simplifying the point cloud,. Since a simplification error of each point is considered in the QEM algorithm, the accuracy is rarely lost while ensuring the simplification of the point cloud by the QEM simplification algorithm.

For example, a specific process of simplifying the point cloud by the QEM algorithm is as follows. Given a group of adjacent vertices $\{v_1, v_2, ..., v_k\}$, $\bar{v}$ is required to be determined to replace the vertices. Herein, $\bar{v}$ is determined by minimizing a quadric error metric. The square of a distance from a point $\bar{v}$ to a plane $f$ is denoted by $d^2(v, f)$, $F(v_i)$ represents a set of mesh surfaces with $v_i$ as a vertex, and a plane $v_i$ is a plane in $F(v_i)$. In this case, a merged quadric error metric is expressed as follows.

$$Q\left(\bar{v}\right) = \sum_{i=1}^{k} \sum_{f \in F(v_i)} d^2\left(\bar{v}, f\right)$$

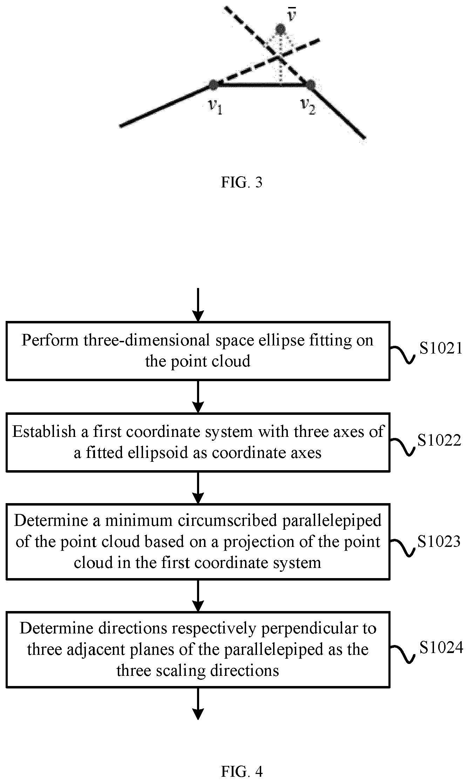

where k represents the number of the vertices, k is a positive integer, and i is a positive integer less than or equal to k. $\bar{v}$ is determined by minimizing $Q(\bar{v})$. For example, during specific use, k may be set to be $k = 2$. It is assumed that there are three mesh surfaces whose vertices are vertices $v_1$, $v_2$. As shown in FIG. 3, dashed lines are distances from a merge point $\bar{v}$ to the three planes respecively. In this case, a sum of squares of lengths of the three dashed lines is the quadric error metric of the merge point $\bar{v}$. A minimum quadric error metric is calculated for every two of all adjacent points, and the vertices are sequentially merged according to an order of the minimum quadric error metrics from small to large, until a pre-specified vertex number is reached.

As described above, the concavity of the object is sensitive to directions. If a size of a three-dimensional object in a dimension (for example, in a thickness direction) greatly differs from sizes (for example, not of the same magnitude) in other two dimensions, the concave of the three-dimensional object in the dimension cannot be approximated. To avoid that the concave of the object in the dimension is approximated, in the three-dimensional object segmentation method according to the embodiment of the present disclosure, sizes of the point cloud representing the three-dimensional object in three dimensions in space are scaled to the same scale (for example, the same magnitude or the same size). For example, for a thin-walled object (that is, a three-dimensional object whose size in a direction is far less than sizes in other two directions), it is assumed that the thin-walled object is a three-dimensional object whose size in a height direction is far less than sizes in length and width directions. The scaling of the point cloud refers to upscaling the size of the thin-walled object in the height direction and downscaling the sizes of the thin-walled object in the length and width directions. That is, the thin-walled object is deformed into an object whose sizes in the length, width and height directions are the same or approximately the same without changing a concave-convex structure of an outer surface of the thin-walled object.

Specifically, in step S102, three scaling directions of the point cloud are first determined. Since the object is in the three-dimensional space, scaling is performed on the point cloud of the object in three dimensions. That is, before the scaling for the point cloud is performed, the three scaling directions in which the scaling is performed are required to be first determined.

For example, three coordinate axes of a world coordinate system in which the point cloud obtained in step S101 is located may be taken as the three scaling directions of the point cloud. However, the point cloud of the three-dimensional object may not be in the center of the world coordinate system, or may have a rotation angle. Therefore, in a more preferred embodiment, it is desired to transform the coordinate system into a coordinate system with the center of the point cloud of the three-dimensional object as an origin, and the scaling directions of the point cloud are further determined in the coordinate system.

Specifically, FIG. 4 shows a possible processing process of step S102. As shown in FIG. 4, the step of determining the three scaling directions of the point cloud data may include the following steps S1021 to S1024.

First, in step S1021, three-dimensional space ellipse fitting is performed on the point cloud. For example, spatial uniform distribution point sampling may be first performed on the point cloud, and the three-dimensional space ellipse fitting is then performed on sampling points. The three-dimensional space ellipse fitting means a process in which an ellipsoid is sought in space, so that most of the sampling points can fall on a surface of the ellipsoid or near the surface of the ellipsoid.

Specifically, the point cloud data of the three-dimensional object has been obtained in step S101 described above. The point cloud data is a set of coordinates of three-dimensional points in space, which is denoted by

$$\left\{ \left( x_i, y_i, z_i \right) \right\}_{i=1}^{m} ,$$

where m represents the number of the three-dimensional points in space, $(x_i, y_i, z_i)$ represents a coordinate of an i-th three-dimensional point, m is a positive integer, and i is a positive integer less than or equal to m. The coordinates of these points may be each substituted into the following ellipsoid equation:

$$Ax^2 + By^2 + Cz^2 + Dxy + Exz + Fyz + Gx + Hy + Kz + L = 0 .$$

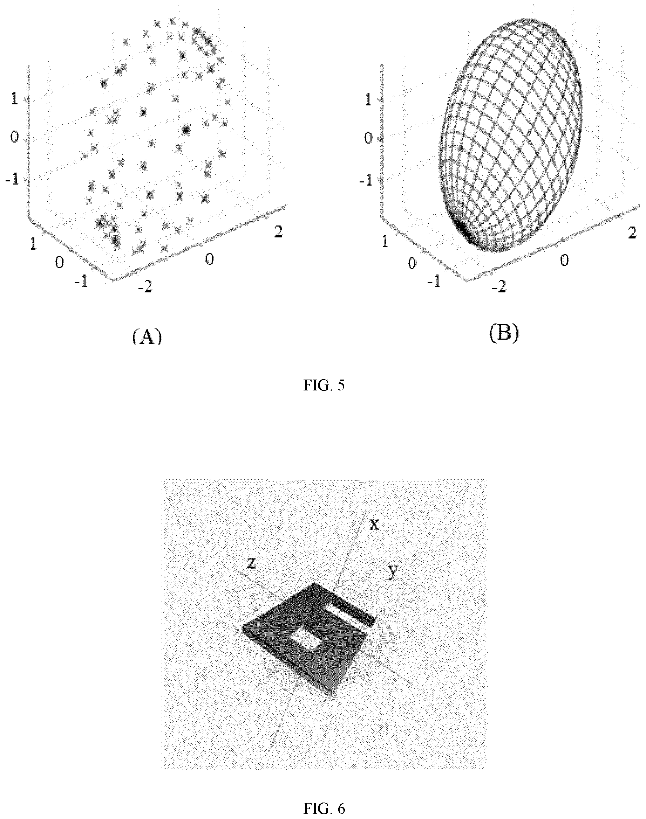

Further, the following parameter requirements are required to be met: $D^2 < 4AB$, $E^2 < 4AC$, and $F^2 < 4BC$. First, initial values of these parameters are determined by a least square method. Then, final parameters are determined by a Gauss-Newton iteration method. Once the parameters (that is, A, B, C, D, E, F, G, H, K, and L described above) in the ellipsoid equation are determined, the ellipsoid equation is determined. Thus, a fitted ellipsoid can be determined. FIG. 5(A) shows an example of a point cloud of a three-dimensional object. As shown in the figure, a point set shown in FIG. 5(A) may be fitted by an ellipsoid shown in FIG. 5(B).

After the ellipsoid that can be used to fit the point cloud is obtained, in step S 1022, a first coordinate system is established with three axes (that is, three radial directions) of a fitted ellipsoid are used as coordinate axes. FIG. 6 shows the three radial directions of the fitted ellipsoid obtained in step S1021, and the three radial directions are taken as x, y, and z axes of the first coordinate system respectively. As shown in FIG. 6, the first coordinate system determined by the three-dimensional space ellipse fitting is a coordinate system with the center of the point cloud of the three-dimensional object as the coordinate origin.

Next, in step S1023, based on a projection of the point cloud in the first coordinate system, a minimum circumscribed parallelepiped of the point cloud is determined.

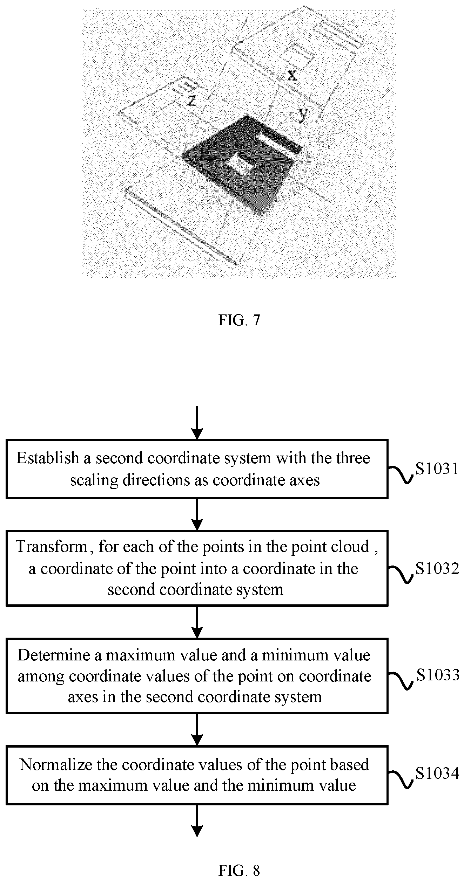

Specifically, first, rotation scale intercepting is performed on projections of the point cloud on coordinate axis planes to obtain a minimum circumscribed cuboid of the point cloud. For example, in a possible embodiment, first, rotation scale intercepting is performed on a projection of the point cloud on an xy coordinate plane using four planes perpendicular to the xy coordinate plane, to select four planes that can contain a minimum area of the projection of the point cloud on the xy coordinate plane. The four planes include two groups of parallel planes, and each plane in one group of the two groups of parallel planes is orthogonal to each plane in the other group of the two groups of parallel planes. Then, the rotation scale intercepting is performed on a projection of the point cloud on an xz coordinate plane or a yz coordinate plane using two parallel planes perpendicular to the xz coordinate plane or the yz coordinate plane, to select two planes that can intercept a minimum size of the projection of the point cloud on the xz coordinate plane or the yz coordinate plane. In this way, the six planes determined in the foregoing manner can form the minimum circumscribed cuboid of the point cloud. FIG. 7 shows projections of a point cloud of a three-dimensional object on coordinate axes in the first coordinate system. It can be seen from FIG. 7 that, since the three-dimensional object is a cuboid thin plate, the minimum circumscribed cuboid of the three-dimensional object is the cuboid thin plate itself.

In addition, in a case that the three-dimensional object is a thin-walled object of another shape, the volume of the circumscribed cuboid may be further reduced. A volume of the circumscribed parallelepiped that can contain all points in the point cloud may be further reduced by adjusting edges of the minimum circumscribed cuboid, for example, by tilting side edges of the minimum circumscribed cuboid and reducing a height of the minimum circumscribed cuboid, until the volume can no longer be reduced. The obtained parallelepiped is taken as the minimum circumscribed parallelepiped of the point cloud. Herein, the volume of the minimum circumscribed parallelepiped is less than the volume of the minimum circumscribed cuboid.

Finally, in step S1024, directions respectively perpendicular to three adjacent planes of the minimum circumscribed parallelepiped are determined as the three scaling directions. The x, y, and z axes shown in FIG. 7 are respectively the three scaling directions. As described above, in the case that the three-dimensional object is a cuboid thin plate, the minimum circumscribed cuboid of the three-dimensional object is the cuboid thin plate itself. It can be seen from a comparison between FIG. 6 and FIG. 7 that, the coordinate axes as the scaling directions in FIG. 7 are the same as the coordinate axes in FIG. 6. It should be noted that, in the case that the three-dimensional object is a thin-walled object of another shape, the minimum circumscribed cuboid may be further adjusted to the minimum circumscribed parallelepiped, to adjust the volume to the minimum. In this case, the adjusted coordinate axes as the scaling directions are slightly different from the coordinate axes in FIG. 6.

Referring to FIG. 1 again, after the scaling directions of the point cloud are determined, next, in step S103, a position of each of points in the point cloud are scaled in the three scaling directions, so that a scaled point cloud has a same scale in the three scaling directions. Herein, the same scale means that the sizes of the scaled point cloud in the three scaling directions are on the same magnitude (for example, several centimeters or several meters), or are the same or approximately the same.

Specifically, FIG. 8 shows a possible processing process of step S103. As shown in FIG. 8, the step of scaling the position of the point cloud in the three scaling directions may include the following steps S1031 to S1034.

First, in step S1031, a second coordinate system is established with the three scaling directions are used as coordinate axes. If the minimum circumscribed parallelepiped of the point cloud determined in step S1023 in FIG. 4 is a cuboid, the three scaling directions are perpendicular to each other. Otherwise, the three scaling directions are non perpendicular to each other. That is, three coordinate axes in the second coordinate system may be not perpendicular to each other, which does not affect a surface concave-convex structure of the scaled point cloud. As described in the context, after the segmentation is completed, the coordinate system is transformed back into the original world coordinate system.

Then, in step S1032, for each of the points in the point cloud, a coordinate of the point is transformed into a coordinate in the second coordinate system.

Next, in step S1033, a maximum value and a minimum value among coordinate values of the point on coordinate axes in the second coordinate system are determined.

Finally, in step S1034, based on the maximum value and the minimum value, the coordinate values of the point are normalized. In this way, the scaling for positions of the points in the point cloud is completed, so that the positions of the points each are normalized to a value in a range of (-1, 1).

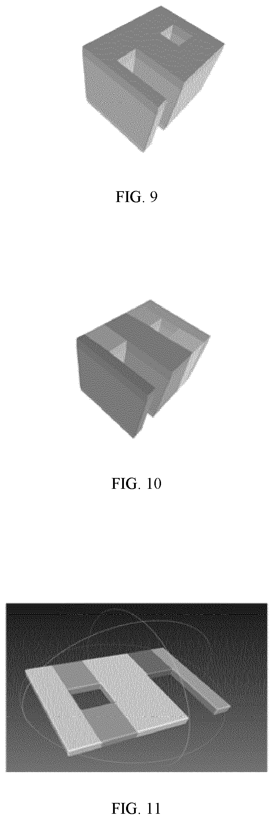

FIG. 9 is a schematic diagram showing a three-dimensional object obtained after performing the scaling processing in FIG. 8. As shown in FIG. 9, the original thin plate-type object is adjusted to an object that has the same scale in the three dimensions of the space.

Referring to FIG. 1 again, finally, in step S104, a segmentation result of the three-dimensional object is determined based on the scaled point cloud, as shown in FIG. 10.

Since the steps of the coordinate system transformation and the scaling are performed, for the segmentation result of the three-dimensional object obtained in step S104, the coordinate system is required to be inversely transformed back into the original coordinate system and in the original scale, to obtain a final segmentation result, as shown in FIG. 11.

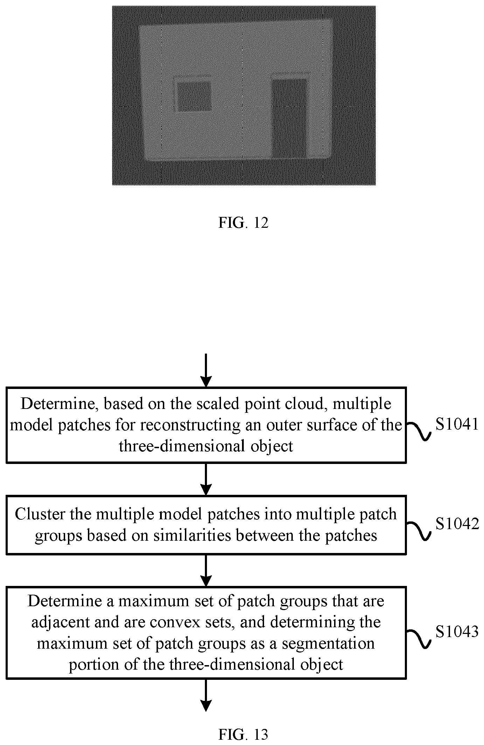

The three-dimensional object segmentation method according to the embodiment of the present disclosure is an approximate convex set segmentation algorithm. In the three-dimensional object segmentation method according to the embodiments of the present disclosure, the point cloud representing the three-dimensional object is scaled to the same scale in directions. In this way, a hollowed-out structure of a thin-walled object is no longer recognized as a concave that may be approximated in the subsequent segmentation processing, so that the segmentation accuracy can be further improved, compared with the conventional three-dimensional object segmentation algorithm. FIG. 12 shows a segmentation result obtained by a conventional approximate convex set segmentation algorithm as a comparative example. It can be clearly seen from FIG. 12 that, in the conventional three-dimensional object segmentation algorithm, a whole wall surface is recognized as a whole without any segmentation, but convex set segmentation can be accurately performed on the wall surface having a hollow-out structure with the three-dimensional object segmentation algorithm in the present disclosure.

FIG. 13 shows a specific process of the segmentation processing in FIG. 1. As shown in FIG. 13, the step of determining the segmentation result of the three-dimensional object may include the following steps S1041 to S1043.

First, in step S1041, based on the scaled point cloud, multiple model patches for reconstructing an outer surface of the three-dimensional object are determined.

For example, in a possible embodiment, the multiple model patches for reconstructing the outer surface of the three-dimensional object may be determined in the following manners.

First, the point cloud is cut by multiple first cubes of equal size. For each of the first cubes, it is determined whether the first cube includes one or more points in the point cloud. If the first cube includes one or more points in the point cloud, the one or more points falling in the first cube are replaced with eight endpoints of the first cube. The above determining and processing are repeated until all of the first cubes are traversed. By such the processing, an updated point cloud can be obtained. All points in the updated point cloud are endpoints of the cubes. In this way, the points in the update point cloud are more evenly distributed.

Then, the updated point cloud is cut by multiple second cubes of equal size. A volume of the second cube is greater than a volume of the first cube. For example, the second cube may include multiple first cubes.

Finally, the model patches are determined based on point intersections between the second cubes and the updated point cloud. Specifically, for eight endpoints of each of the second cubes, it is determined whether the eight endpoints are located in the updated point cloud. Based on the number and positions of the endpoints located in the updated point cloud, a pre-established comparison table is looked up to determine which patches are used to reconstruct a contour of the outer surface of the three-dimensional object.

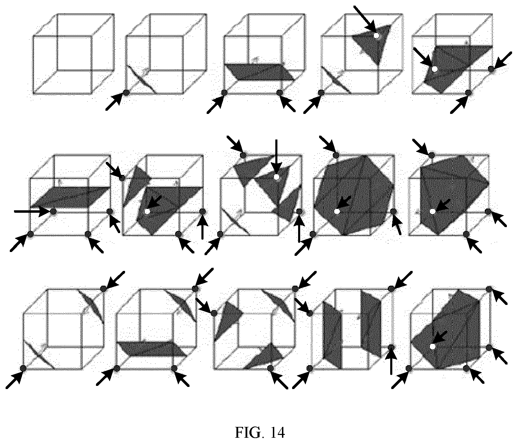

FIG. 14 shows a coincidence between the eight endpoints of the second cube and the points in the updated point cloud and corresponding model patches as a comparison table. In FIG. 14, a solid point to which an arrow is pointed represents an endpoint of the second cube that coincides with the point in the updated point cloud, and multiple patches filled with dark colors inside the second cube represent the corresponding model patches.

The following description is given by taking the second cube in a second row and first column in FIG. 14 as an example. If four endpoints on a lower surface in the second cube coincide with the points in the updated point cloud, the four endpoints are replaced with a patch shown in the cube. That is, for the second cube that is currently focused, the coincidence between endpoints of the second cube and the points in the updated point cloud is firstly determined, that is, it is firstly determined which points in the second cube coincide with the points in the updated point cloud. Next, the second cube is corresponded to one of 15 cubes shown in FIG. 14, and the points in the second cube are replaced with patches shown in the cube.

The above processing is repeated for each second cube until all of the second cubes are traversed. After the processing is completed, the updated point cloud is changed to a combination of multiple model patches that can be used to reconstruct the outer surface of the three-dimensional object. In addition, for the obtained outer surface contour, adjacent patches around the outer surface contour may be further searched for, and normal vector mean adjustment is sequentially performed on the adjacent patches, to eliminate coarse particles on the outer surface of the object.

As shown in FIG. 14, triangular patches are taken as model patches for reconstructing the contour of the object. In this case, more irregular graphic edges inevitably appear in the reconstructed object contour. That is, jagged boundaries may appear in the segmentation. Therefore, in a possible embodiment, after the contour surface is reconstructed, an additional adjustment point may be further added, to enhance the regularity of subsequently segmented graphics.

Specifically, after the step of determining the multiple model patches for reconstructing the outer surface of the three-dimensional object, the method provided in the present disclosure may further include: adding an adjustment point on each of the model patches; and generating a new model patch based on the added adjustment point.

For example, for each of the triangular patches, a mean value of vertices of the triangular patch may be calculated, and a mean value point is added to the triangular patch. Further, an intersection point of a ray emitted from the mean value point as a starting point towards the inside of the three-dimensional object in a normal vector direction perpendicular to the model patch with another model patch (for example, a model patch at the other end of the object) is determined as a geometric symmetry point of the mean value point. Finally, a new model patch is generated based on the mean value point and the geometric symmetry point. For example, three new patches may be generated by connecting the mean value point or the geometric symmetry point with the vertexes of the triangular patch, respectively. The newly generated triangular patches are added to the three-dimensional object.

Then, in step S1042, based on similarities between the patches, the multiple model patches are clustered into multiple patch groups. For example, for all of the patches reconstructed in step S1041, the similarity may be determined by determining a concavity cost function between two adjacent patches. If the concavity cost function between the two adjacent patches is less than a threshold, the similarity between the two adjacent patches is considered to be high, and the two adjacent patches are clustered into a patch group. Such processing is repeated for all of the patches. Finally, all of the model patches are clustered into multiple patch groups.

Finally, in step S1043, a maximum set of patch groups that are adjacent and are convex sets is determined, and the maximum set of patch groups is determined as a segmentation portion of the three-dimensional object. For example, the relationship between the multiple patch groups may be represented by a model patch connection graph. A maximum spanning tree algorithm is applied to search for an independent subgraph in the model patch connection graph. The independent subgraph represents the maximum set of patch groups that are adjacent and are convex sets. In addition, the segmentation portion generated in this way may have a local tiny concave. In this case, the tiny concave may be further filled up. For example, a convex hull may be calculated for points in the obtained maximum set of the patch groups sequentially by incremental vertices. The convex hull refers to a minimum convex polyhedron that can cover all points. Then, the generated convex hull is resampled, and the model contour is adjusted.

The foregoing processing is repeated for all of the patch groups, until all segmentation portions of the three-dimensional object are found. Thus, the segmentation for the three-dimensional object is completed.

In addition, as described above, the transformation of the coordinate axes is performed during the scaling for the position of the point cloud. In this case, after the segmentation result of the three-dimensional object is obtained, the reconstructed three-dimensional object is required to be inversely transformed back into the original coordinate system and in the original scale, to maintain the original shape of the three-dimensional object.

Specifically, based on the first coordinate system and the second coordinate system respectively established in steps S1022 and S1031 and the normalization processing in step S1034 described above, a coordinate system rotation matrix and scale transform coefficients of the coordinate axes may be obtained. Then, the coordinate system rotation matrix and the scale transformation coefficients are inversely transformed to obtain a transformation relationship for transforming back to the original world coordinate system and the original scale. According to the obtained transformation relationship and the maximum set of patch groups that are adjacent and are convex sets obtained in step S1043, the coordinate transformation and scale transformation are sequentially performed on each patch in the set, to remap back to an initial position. Finally, the segmentation result of the three-dimensional object may be obtained through sorting.

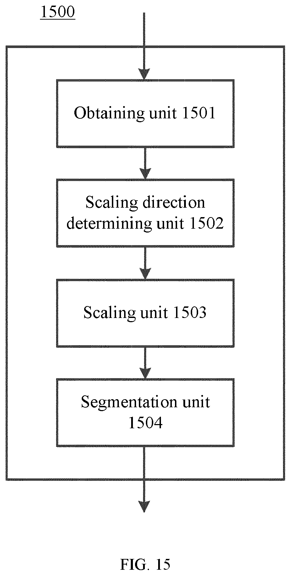

Next, a three-dimensional object segmentation device according to an embodiment of the present disclosure is described with reference to FIG. 15. As shown in FIG. 15, a three-dimensional object segmentation device 1500 includes: an obtaining unit 1501, a scaling direction determining unit 1502, a scaling unit 1503, and a segmentation unit 1504.

The obtaining unit 1501 is configured to obtain a point cloud of a three-dimensional object.

The scaling direction determining unit 1502 is configured to determine three scaling directions of the point cloud.

The scaling unit 1503 is configured to scale a position of each of points in the point cloud in the three scaling directions, so that a scaled point cloud has a same scale in the three scaling directions.

The segmentation unit 1504 is configured to determine a segmentation result of the three-dimensional object based on the scaled point cloud.

Since the object is in a three-dimensional space, scaling is performed on the point cloud of the object in three dimensions. That is, before the scaling for the point cloud is performed, the three scaling directions in which the scaling is performed are required to be first determined.

For example, three coordinate axes of a world coordinate system in which the point cloud obtained by the obtaining unit 1501 is located may be taken as the three scaling directions of the point cloud. However, the point cloud of the three-dimensional object may not be in the center of the world coordinate system, or may have a rotation angle. Therefore, in a more preferred embodiment, it is desired to transform the coordinate system into a coordinate system with the center of the point cloud of the three-dimensional object as an origin, and the scaling directions of the point cloud are further determined in the coordinate system.

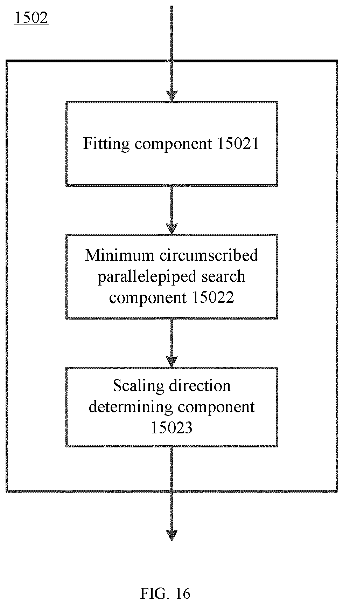

Specifically, FIG. 16 shows an example of a specific configuration of the scaling direction determining unit in FIG. 15. As shown in FIG. 16, the scaling direction determining unit 1502 may include: a fitting component 15021, a minimum circumscribed parallelepiped search component 15022, and a scaling direction determining component 15023.

The fitting component 15021 is configured to: perform three-dimensional space ellipse fitting on the point cloud, and establish a first coordinate system with three axes of a fitted ellipsoid as coordinate axes.

The minimum circumscribed parallelepiped search component 15022 is configured to: determine a minimum circumscribed parallelepiped of the point cloud based on a projection of the point cloud in the first coordinate system.

Specifically, the minimum circumscribed parallelepiped search component 15022 is configured to: first, perform rotation scale intercepting on projections of the point cloud on coordinate axis planes to obtain a minimum circumscribed cuboid of the point cloud. For example, in a possible embodiment, first, rotation scale intercepting is performed on a projection of the point cloud on an xy coordinate plane using four planes perpendicular to the xy coordinate plane, to select four planes that can contain a minimum area of the projection of the point cloud on the xy coordinate plane. The four planes include two groups of parallel planes, and each plane in one group of the two groups of parallel planes is orthogonal to each plane in the other group of the two groups of parallel planes. Then, the rotation scale intercepting is performed on a projection of the point cloud on an xz coordinate plane or a yz coordinate plane using two parallel planes perpendicular to the xz coordinate plane or the yz coordinate plane, to select two planes that can intercept a minimum size of the projection of the point cloud on the xz coordinate plane or the yz coordinate plane. In this way, the six planes determined in the foregoing manner can form the minimum circumscribed cuboid of the point cloud. For example, in a case that the three-dimensional object is a cuboid thin plate, the minimum circumscribed cuboid of the three-dimensional object is the cuboid thin plate itself. In addition, in a case that the three-dimensional object is a thin-walled object of another shape, the volume of the circumscribed cuboid may be further reduced. A volume of the circumscribed parallelepiped that can contain all points in the point cloud may be further reduced by adjusting edges of the minimum circumscribed cuboid, for example, by tilting side edges of the minimum circumscribed cuboid and reducing a height of the minimum circumscribed cuboid, until the volume can no longer be reduced. The obtained parallelepiped is taken as the minimum circumscribed parallelepiped of the point cloud. Herein, the volume of the minimum circumscribed parallelepiped is less than the volume of the minimum circumscribed cuboid.

The scaling direction determining component 15023 is configured to determine directions respectively perpendicular to three adjacent planes of the minimum circumscribed parallelepiped as the three scaling directions.

Specifically, in a possible embodiment, the scaling unit 1503 may be further configured to: establish a second coordinate system with the three scaling directions as coordinate axes; transform, for each of the points in the point cloud, a coordinate of the point into a coordinate in the second coordinate system; determine a maximum value and a minimum value among coordinate values of the point on coordinate axes in the second coordinate system; and normalize the coordinate values of the point based on the maximum value and the minimum value.

It can be seen that, in the three-dimensional object segmentation device according to the embodiment of the present disclosure, the point cloud representing the three-dimensional object is scaled to the same scale in directions. In this way, a hollowed-out structure of a thin-walled object is no longer recognized as a concave that may be approximated in the subsequent segmentation processing, so that the segmentation accuracy can be further improved, compared with the conventional three-dimensional object segmentation algorithm.

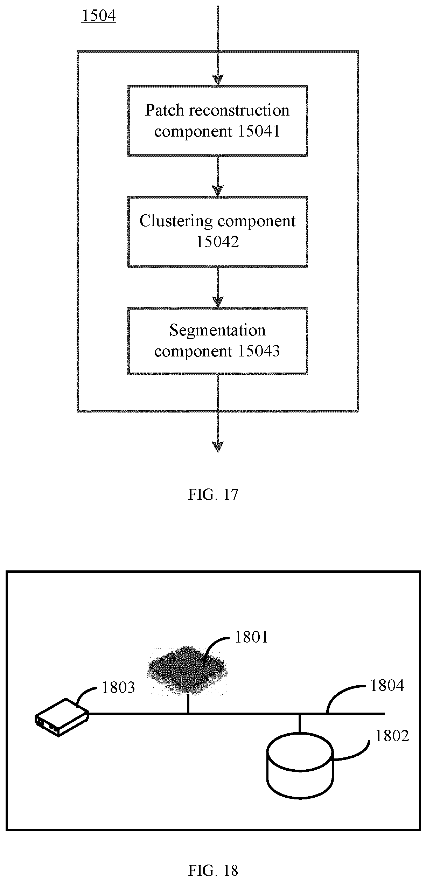

In addition, FIG. 17 shows an example of a specific configuration of the segmentation unit in FIG. 15. As shown in FIG. 17, the segmentation unit 1504 includes: a patch reconstruction component 15041, a clustering component 15042, and a segmentation component 15043.

The patch reconstruction component 15041 is configured to: determine, based on the scaled point cloud, multiple model patches for reconstructing an outer surface of the three-dimensional object. Specifically, the patch reconstruction unit 15041 is further configured to: cut the point cloud by multiple first cubes of equal size; replace all of the points in the point cloud with endpoints of the first cubes, to obtain an updated point cloud; cut the updated point cloud by multiple second cubes of equal size, where a volume of each of the second cubes is greater than a volume of each of the first cubes; and determine the model patches based on point intersections between the second cubes and the updated point cloud.

The clustering component 15042 is configured to: cluster the multiple model patches into multiple patch groups based on similarities between the patches.

The segmentation component 15043 is configured to: determine a maximum set of patch groups that are adjacent and are convex sets, and determine the maximum set of patch groups as a segmentation portion of the three-dimensional object.

As described above, more irregular graphic edges inevitably appear in the reconstructed object contour. That is, jagged boundaries may appear in the segmentation. Therefore, in a possible embodiment, after the contour surface is reconstructed, an additional adjustment point may be further added, to enhance the regularity of subsequently segmented graphics.

Specifically, the segmentation unit 1504 may include: an adjustment component (not shown in the figure). The adjustment component is configured to: add an adjustment point on each of the model patches; and generate a new model patch based on the added adjustment point.

In addition, as described above, the transformation of the coordinate axes is performed during the scaling of the position of the point cloud. In this case, the three-dimensional object segmentation device 1500 may further include: an inverse transformation unit (not shown in the figure). The inverse transformation unit is configured to inversely transform the reconstructed three-dimensional object back into an original coordinate system and in an original scale after the segmentation result of the three-dimensional object is obtained, to maintain the original shape of the three-dimensional object.

Since specific operations of the units or the components in the three-dimensional object segmentation device according to the embodiment of the present disclosure completely correspond to the process steps in the three-dimensional object segmentation method described above, details of the specific operations are not described in detail herein to avoid redundancy.

FIG. 18 shows an example of a three-dimensional object segmentation device as a hardware entity provided in the present disclosure. The device includes a processor (also referred to as a processing unit) 1801, a memory (also referred to as a storage unit) 1802, and at least one external communication interface 1803. The processor 1801, the memory 1802, and the external communication interface 1803 are all connected to each other via a communication bus 1804.

For the processor 1801 used for data processing, the processor may be implemented by a microprocessor, a central processing unit (CPU), a digital signal processor (DSP), or a field-programmable gate array (FPGA). The memory 1802 stores an operation instruction. The operation instruction may be a computer executable code (also referred to as a computer program). The steps in the flow of the method according to the embodiment of the present disclosure are implemented by the operation instruction.

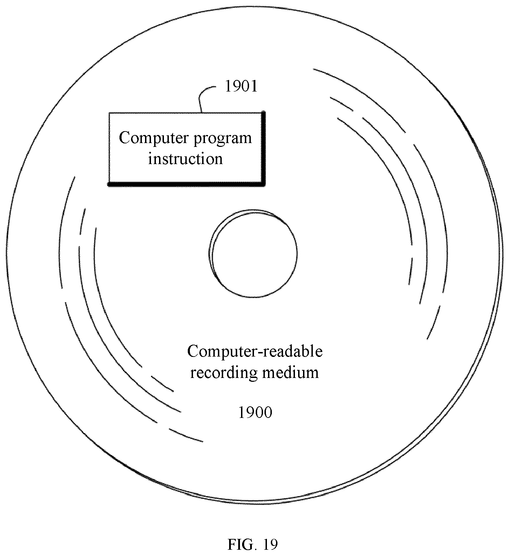

FIG. 19 is a schematic diagram showing a computer-readable recording medium according to an embodiment of the present disclosure. As shown in FIG. 19, a computer-readable recording medium 1900 according to this embodiment of the present disclosure stores a computer program instruction 1901. The computer program instruction 1901, when executed by a processor, performs the three-dimensional object segmentation method according to the embodiment of the present disclosure described with reference to the accompanying drawings.

The three-dimensional object segmentation method, the three-dimensional object segmentation device, and the medium according to the embodiments of the present disclosure have been described in detail with referring to FIG. 1 to FIG. 19. In the three-dimensional object segmentation method, the three-dimensional object segmentation device, and the medium according to the embodiments of the present disclosure, the point cloud representing the three-dimensional object is scaled to the same scale in directions. In this way, a hollowed-out structure of a thin-walled object is no longer recognized as a concave that may be approximated in the subsequent segmentation processing, so that the segmentation accuracy can be further improved, compared with the conventional three-dimensional object segmentation algorithm.

It should be noted that, in this specification, the term "include", "comprise", or any other variant thereof is intended to encompass non-exclusive inclusion, so that a process, a method, an article, or a device that includes a series of elements and that not only includes the elements, but also includes other elements not explicitly listed, or include elements inherent to the process, the method, the article, or the device. Unless otherwise specified, the element defined by the sentence "including a..." does not exclude the presence of additional same elements in the process, the method, the article, or the device that includes the elements.

Finally, it should further be noted that, the foregoing series of processing include not only the processing performed chronologically in the order described herein, but also the processing performed in parallel or individually, rather than chronologically.

Based on the foregoing description for the embodiments, a person skilled in the art may clearly understand that the present disclosure may be implemented by software and a necessary hardware platform, or may be implemented by software only. Based on such an understanding, all or a part of the technical solutions of the present disclosure contributing to the background art may be implemented in the form of a software product. The computer software product may be stored in a storage medium, such as a ROM/RAM, a magnetic disk, or an optical disc. The computer software product includes several instructions for causing a computer device (which may be a personal computer, a server, or a network device) to perform the method described in the embodiments or some parts of the embodiments of the present disclosure.

The present disclosure is described above in detail. The principle and embodiments of the present disclosure are set forth by means of specific examples in this specification. The descriptions for the foregoing embodiments are merely intended to help understand the method and the core idea of the method of the present disclosure. Meanwhile, a person of ordinary skill in the art may make modifications to the specific implementations and application range according to the idea of the present disclosure. In conclusion, the content of this specification is not construed as a limit on the present disclosure.

**Claims**

1. A three-dimensional object segmentation method, applied to a three-dimensional object segmentation device, the method comprising:

   obtaining a point cloud of a three-dimensional object;
   determining three scaling directions of the point cloud;
   scaling a position of each of points in the point cloud in the three scaling directions, so that a scaled point cloud has a same scale in the three scaling directions; and
   determining a segmentation result of the three-dimensional object based on the scaled point cloud.

2. The method according to claim 1, wherein the step of determining the three scaling directions of the point cloud data comprises:

   performing three-dimensional space ellipse fitting on the point cloud;

establishing a first coordinate system with three axes of a fitted ellipsoid as coordinate axes;
determining a minimum circumscribed parallelepiped of the point cloud based on a projection of the point cloud in the first coordinate system; and
determining directions respectively perpendicular to three adjacent planes of the minimum circumscribed parallelepiped as the three scaling directions.

3. The method according to claim 2, wherein the step of determining the minimum circumscribed parallelepiped of the point cloud based on the projection of the point cloud in the first coordinate system comprises:

performing rotation scale intercepting on projections of the point cloud on coordinate axis planes to obtain a minimum circumscribed cuboid of the point cloud; and
adjusting edges of the minimum circumscribed cuboid to obtain the minimum circumscribed parallelepiped, wherein
a volume of the minimum circumscribed parallelepiped is less than a volume of the minimum circumscribed cuboid.

4. The method according to claim 2, wherein the step of scaling the position of the point cloud in the three scaling directions comprises:

establishing a second coordinate system with the three scaling directions as coordinate axes;
transforming, for each of the points in the point cloud, a coordinate of the point into a coordinate in the second coordinate system;
determining a maximum value and a minimum value among coordinate values of the point on coordinate axes in the second coordinate system; and
normalizing the coordinate values of the point based on the maximum value and the minimum value.

5. The method according to claim 1, wherein the step of determining the segmentation result of the three-dimensional object based on the scaled point cloud comprises:

determining, based on the scaled point cloud, a plurality of model patches for reconstructing an outer surface of the three-dimensional object;
clustering the plurality of model patches into a plurality of patch groups based on similarities between the model patches; and
determining a maximum set of patch groups that are adjacent and are convex sets, and determining the maximum set of patch groups as a segmentation portion of the three-dimensional object.

6. The method according to claim 5, wherein the step of determining, based on the scaled point cloud, the plurality of model patches for reconstructing the outer surface of the three-dimensional object comprises:

cutting the point cloud by a plurality of first cubes of equal size;
replacing all of the points in the point cloud with endpoints of the first cubes, to obtain an updated point cloud;
cutting the updated point cloud by a plurality of second cubes of equal size, a volume of each of the second cubes being greater than a volume of each of the first cubes; and
determining the model patches based on point intersections between the second cubes and the updated point cloud.

7. The method according to claim 5, after the step of determining the plurality of model patches for reconstructing the outer surface of the three-dimensional object, the method further comprises:

adding an adjustment point on each of the model patches; and
generating a new model patch based on the added adjustment point.

8. A three-dimensional object segmentation device, comprising:

an obtaining unit, configured to obtain a point cloud of a three-dimensional object;
a scaling direction determining unit, configured to determine three scaling directions of the point cloud;
a scaling unit, configured to scale a position of each of points in the point cloud in the three scaling directions, so that a scaled point cloud has a same scale in the three scaling directions; and

a segmentation unit, configured to determine a segmentation result of the three-dimensional object based on the scaled point cloud.

9. A three-dimensional object segmentation device, comprising:

a storage unit, storing a computer program; and
a processing unit, configured to implement, when executing the computer program, the following operations of:

obtaining a point cloud of a three-dimensional object;
determining three scaling directions of the point cloud;
scaling a position of each of points in the point cloud in the three scaling directions, so that a scaled point cloud has a same scale in the three scaling directions; and
determining a segmentation result of the three-dimensional object based on the scaled point cloud.

10. A computer-readable recording medium storing a computer program, wherein the computer program, when executed by a processing unit, implements the following operations of:

obtaining a point cloud of a three-dimensional object;
determining three scaling directions of the point cloud;
scaling a position of each of points in the point cloud in the three scaling directions, so that a scaled point cloud has a same scale in the three scaling directions; and
determining a segmentation result of the three-dimensional object based on the scaled point cloud.

```
        ┌─────────────┐
        │    Start    │
        └──────┬──────┘
               │
               ▼
┌──────────────────────────────────────────────┐
│  Obtain a point cloud of a three-dimensional  │   S101
│                 object                         │
└──────────────────────┬───────────────────────┘
                       │
                       ▼
┌──────────────────────────────────────────────┐
│ Determine three scaling directions of the     │   S102
│              point cloud                       │
└──────────────────────┬───────────────────────┘
                       │
                       ▼
┌──────────────────────────────────────────────┐
│  Scale a position of each of points in the    │
│  point cloud in the three scaling directions,  │   S103
│  so that a scaled point cloud has a same scale │
│        in the three scaling directions         │
└──────────────────────┬───────────────────────┘
                       │
                       ▼
┌──────────────────────────────────────────────┐
│   Determine a segmentation result of the       │   S104
│  three-dimensional object based on the scaled  │
│              point cloud                        │
└──────────────────────┬───────────────────────┘
                       │
                       ▼
        ┌─────────────┐
        │     End     │
        └─────────────┘
```

FIG. 1

FIG. 2

FIG. 3

Perform three-dimensional space ellipse fitting on the point cloud — S1021

Establish a first coordinate system with three axes of a fitted ellipsoid as coordinate axes — S1022

Determine a minimum circumscribed parallelepiped of the point cloud based on a projection of the point cloud in the first coordinate system — S1023

Determine directions respectively perpendicular to three adjacent planes of the parallelepiped as the three scaling directions — S1024

FIG. 4

(A)　　　　　　　　　　　　(B)

FIG. 5

FIG. 6

FIG. 7

Establish a second coordinate system with the three scaling directions as coordinate axes — S1031

Transform, for each of the points in the point cloud , a coordinate of the point into a coordinate in the second coordinate system — S1032

Determine a maximum value and a minimum value among coordinate values of the point on coordinate axes in the second coordinate system — S1033

Normalize the coordinate values of the point based on the maximum value and the minimum value — S1034

FIG. 8

FIG. 9

FIG. 10

FIG. 11

FIG. 12

Determine, based on the scaled point cloud, multiple model patches for reconstructing an outer surface of the three-dimensional object ⟶ S1041

Cluster the multiple model patches into multiple patch groups based on similarities between the patches ⟶ S1042

Determine a maximum set of patch groups that are adjacent and are convex sets, and determining the maximum set of patch groups as a segmentation portion of the three-dimensional object ⟶ S1043

FIG. 13

FIG. 14

1500

Obtaining unit 1501

Scaling direction
determining unit 1502

Scaling unit 1503

Segmentation unit
1504

FIG. 15

1502

Fitting component 15021

Minimum circumscribed
parallelepiped search
component 15022

Scaling direction
determining component
15023

FIG. 16

1504

Patch reconstruction
component 15041

Clustering component
15042

Segmentation
component 15043

FIG. 17

1801

1803

1804

1802

FIG. 18

1901

Computer program
instruction

Computer-readable
recording medium

1900

FIG. 19

## INTERNATIONAL SEARCH REPORT

| International application No. |
| --- |
| **PCT/CN2019/115095** |

**A. CLASSIFICATION OF SUBJECT MATTER**

G06T 7/10(2017.01)i; G06T 17/00(2006.01)i

According to International Patent Classification (IPC) or to both national classification and IPC

**B. FIELDS SEARCHED**

Minimum documentation searched (classification system followed by classification symbols)

G06T; G06F

Documentation searched other than minimum documentation to the extent that such documents are included in the fields searched

Electronic data base consulted during the international search (name of data base and, where practicable, search terms used)

DWPI, SIPOABS, CNKI, CNABS: 3-D, 三维, 方向, 点云, 尺度, direction, point cloud, scale

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110163863 A (TENCENT TECHNOLOGY SHENZHEN CO., LTD.) 23 August 2019 (2019-08-23) entire document | 1-10 |
| A | CN 104103035 A (SHENZHEN INSTITUTES OF ADVANCED TECHNOLOGY, CHINESE ACADEMY OF SCIENCES) 15 October 2014 (2014-10-15) entire document | 1-10 |
| A | CN 108537868 A (SONY CORPORATION) 14 September 2018 (2018-09-14) entire document | 1-10 |
| A | US 8233716 B2 (PALO ALTO RESEARCH CENTER INCORPORATED) 31 July 2012 (2012-07-31) entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 December 2019** | **20 February 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/115095**

| Patent document cited in search report | | | Publication date (day/month/year) | Patent family member(s) | | | Publication date (day/month/year) |
|---|---|---|---|---|---|---|---|
| CN | 110163863 | A | 23 August 2019 | None | | | |
| CN | 104103035 | A | 15 October 2014 | CN | 104103035 | B | 05 December 2017 |
| CN | 108537868 | A | 14 September 2018 | US | 2018253885 | A1 | 06 September 2018 |
| | | | | US | 10475229 | B2 | 12 November 2019 |
| US | 8233716 | B2 | 31 July 2012 | EP | 2138978 | B1 | 10 October 2018 |
| | | | | JP | 2010009599 | A | 14 January 2010 |
| | | | | US | 2009324087 | A1 | 31 December 2009 |
| | | | | EP | 2138978 | A2 | 30 December 2009 |
| | | | | EP | 2138978 | A3 | 07 March 2012 |
| | | | | JP | 5149246 | B2 | 20 February 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811315438